# EUROPEAN PATENT SPECIFICATION

(11) **EP 0 901 709 B1**
(45) Date of publication and mention of the grant of the patent: **30.10.2002**
(21) Application number: 97925374.7
(22) Date of filing: 27.05.1997
(51) Int. Cl.: H02K 15/085

(54) **STATOR WINDING OF A ROTATING ELECTRIC MACHINE AND SUCH A MACHINE**
WICKLUNG FÜR DEN STATOR EINER ROTIERENDEN ELEKTRISCHEN MASCHINE SOWIE EINE DERARTIGE MASCHINE
BOBINAGE POUR STATOR DE MACHINE ELECTRIQUE TOURNANTE ET LADITE MACHINE

(30) Priority: 29.05.1996 SE 9602079; 29.05.1996 SE 9602094; 03.02.1997 SE 9700356
(43) Date of publication of application: 17.03.1999
(73) Proprietor: ABB AB, 721 83 Västeras (SE)
(72) Inventor: LEIJON, Mats, S-723 35 Väster s (SE); HÖLLELAND, Mons, S-723 53 Väster s (SE); KALLDIN, Hans-Olof, S-723 46 Väster s (SE); TEMPLIN, Peter, S-731 40 Köping (SE); ROTHMAN, Bengt, S-723 36 Väster s (SE); IVARSON, Claes, S-725 91 Väster s (SE); GÖRAN, Bengt, S-723 55 Väster s (SE)
(74) Representative: Johansson Webjörn, Ingmari
(86) International application number: SE9700905
(87) International publication number: WO97047067

(56) References cited:
- WO-A-93/21681
- DE-A- 2 155 371
- DE-A- 3 028 777
- GB-A- 2 070 470
- GB-A- 2 106 721
- US-A- 4 307 311
- US-A- 4 918 347
- US-A- 5 036 165
- PATENT ABSTRACTS OF JAPAN, Vol. 9, No. 10, E-290; & JP,A,59 159 642 (MITSUBISHI DENKI K.K.), 10 Sept. 1984.

## Description

The present invention relates to the area of rotating electric machines such as synchronous machines, and also dual-fed machines, applications in asynchronous static current converter cascades, outerpole machines and synchronous flow machines and is intended to be used at high voltages, by which is implied electric voltages in excess of 10 kV. A typical operating range for the machine according to the invention may be from 36 to 800 kV.

The invention relates to a stator winding in a rotating electric machine.

A stator winding in a rotating electric machine comprising a stator provided with radial slots to hold a winding is known from D1: US-A- 4 853 565. The winding is formed by a conductor that passes to and fro through the stator forming coils with coil-ends protruding from each end surface of the stator. The winding is arranged in layers at different radial distances from the air gap between the rotor and the stator.

Since the stator winding in the machine, according to the invention, consists of high-voltage insulated electric conductors, in the following termed cables, with permanent insulation similar to that used in cables for transmitting electric power (e.g. PEX cables), the voltage of the machine may be increased to such levels that it may be connected directly to the power network without an intermediate transformer. These voltage levels reaching the level of the power network may be in the range of 130-400 kV and up to 800kV or higher. This enables the elimination of the step-up transformer and a high-current breaker, thereby enabling lower total plant cost.

It is known to manufacture coils for rotating machines for a voltage range of 10-20kV.

However, attempts at developing a generator for voltages higher than this have been in progress for some time, as is evident from "Electrical World", October 15 1932, pages 524-525, for instance. This describes how a generator designed by Parson 1929 was constructed for 33 kV. A generator in Langerbrugge. Belgium, is also described which produced a voltage of 36 kV. Although the article also speculates on the possibility of increasing the voltage levels, development of the concepts upon which these generators were based ceased. This was primarily due to deficiencies in the insulating system where several layers of varnish-impregnated mica foil and paper were used.

In A report from the Electric Power Research Institute, EPR1, EL-3391, from April 1984 an exposition is given of the generator concept in which a higher voltage is achieved in an electric generator with the object of being able to connect such a generator to a power network without intermediate transformers. The report deems such a solution to offer satisfactory gains in efficiency and financial advantages. The main reason that in 1984 it was considered possible to start developing generators for direct connection to the power network was that by that time a superconducting rotor had been developed. The considerable excitation capacity of the superconducting field makes it possible to use air-gap windings with sufficient thickness to withstand the electric stresses.

By combining the construction of an excitation circuit together with winding, a so-called "monolith cylinder armature", a concept in which two cylinders of conductors are enclosed in three cylinders of insulation and the whole structure is attached to an iron core without teeth, it was deemed that a rotating electric machine for high voltage could be directly connected to a power network. This solution implied that the main insulation had to be made sufficiently thick to withstand network-to-network and network-to-earth potentials. Besides it requiring a supraconducting rotor, an obvious drawback with the proposed solution is that it requires a very thick insulation, thus increasing the size of the machine. The coil ends must be insulated and cooled with oil or freones in order to direct the large electric fields into the ends. The whole machine is to be hermetically enclosed to prevent the liquid dielectric medium from absorbing moisture from the atmosphere.

All large generators are normally designed with double-layer winding and coils of equal size. Each coil is placed with the one side in one layer and the other side in the other layer. This implies that all coils cross each other at the coil ends. In high-voltage machines the slots in which the coils are placed in the stator arc considerably deeper and typically have 10-12 or up to 18, and in certain cases even more winding layers. The number of coil ends is therefore large with many intersections, which complicates the job of winding and may also cause the coil ends to protrude into the air gap between stator and rotor. Another problem is the increased risk of wear at all the intersection points between the coils.

The object of the present invention is to solve the problem of the large coil-end packages and minimize the number of intersections between the winding coils. This object is achieved by the stator winding, according to the invention, being given the features defined in the claims.

The invention is primarily intended for use with a high-voltage cable of the type constructed from a core having a number of strand parts, a semi-conducting layer surrounding the core, an insulating layer surrounding the inner semi-conducting layer and an outer semi-conducting layer surrounding the insulating layer, and its advantages will be particularly noticeable therewith. It relates particularly to such a cable having a diameter within the interval 20-200 mm and a conducting area within the interval 80-3000 mm². Such applications of the invention thus constitute preferred embodiments thereof.

The invention is described in more detail with reference to the accompanying drawings in which;
Figure 1 shows a cross -section through a cable used for the invention,
Figure 2 shows a part of one end of a stator having a plurality of coil ends protruding from its surface, only a few of which are included in the drawing,
Figure 3 shows in radial section one half of an alternating current generator with a stator winding according to the invention,
Figure 4 is a schematic diagram of the winding according to one embodiment of the invention.
Figure 5 is a schematic diagram of the winding according to a second embodiment of the invention.
Figure 6 shows one sector of a stator lamination for a winding according to the invention,
Figure 7 shows a schematic diagram of the winding according to a third embodiment of the invention, and
Figure 8 shows a coil-end package seen radially from the air gap, with a winding according to the invention.

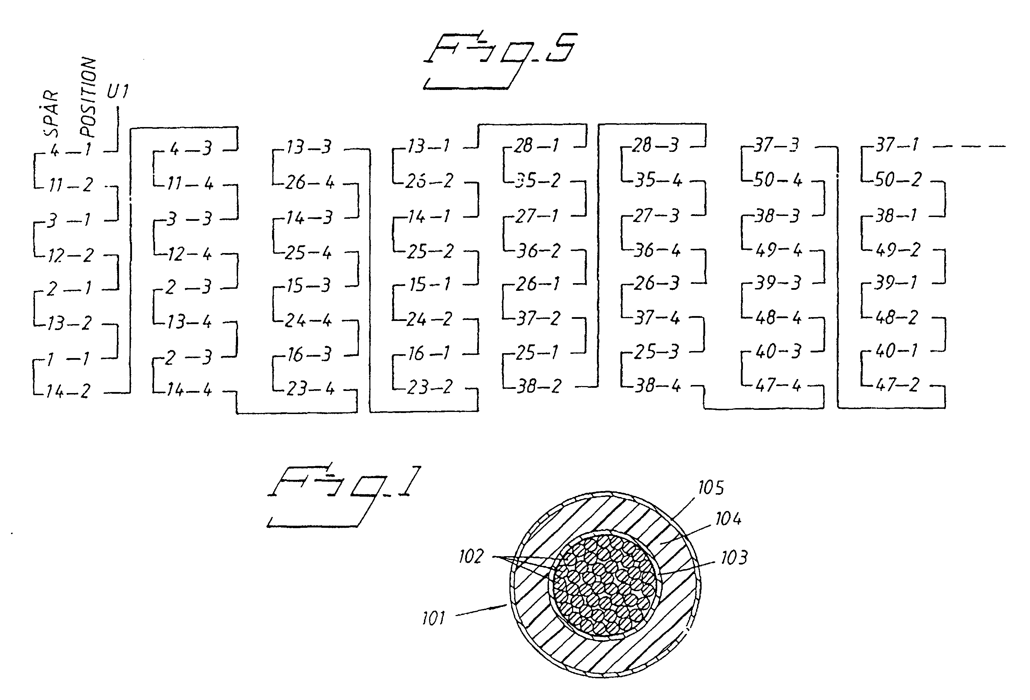

Figure 1 shows a cross-sectional view of a cable 101 used for the present invention. The cable 101 comprises a conductor 102 consisting of a number of strands of copper, for instance, and having circular cross section. This conductor 102 is arranged in the middle of the cable 101. Around the conductor 102 is a first semi-conducting layer 103, and around the first semi-conducting layer 103 is an insulating layer 104, e.g. PEX insulation. Around the insulating layer 104 is a second semi-conducting layer 105. In this case, therefore, the cable does not include the outer protective sheath that normally surrounds such cables for power distribution.

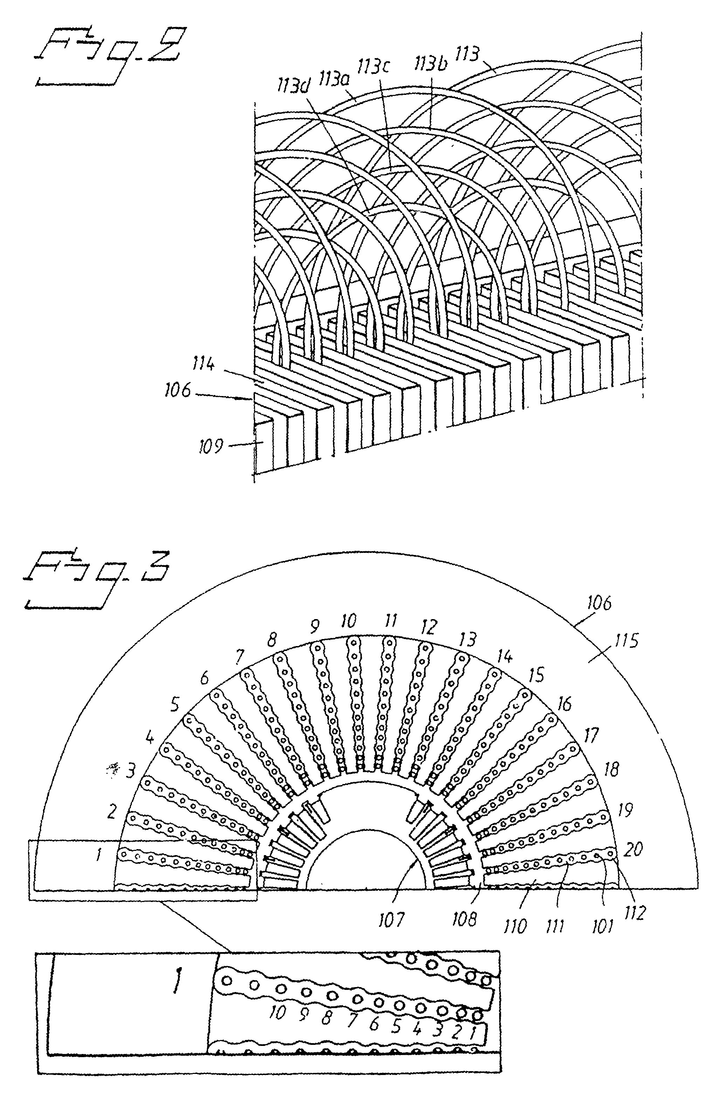

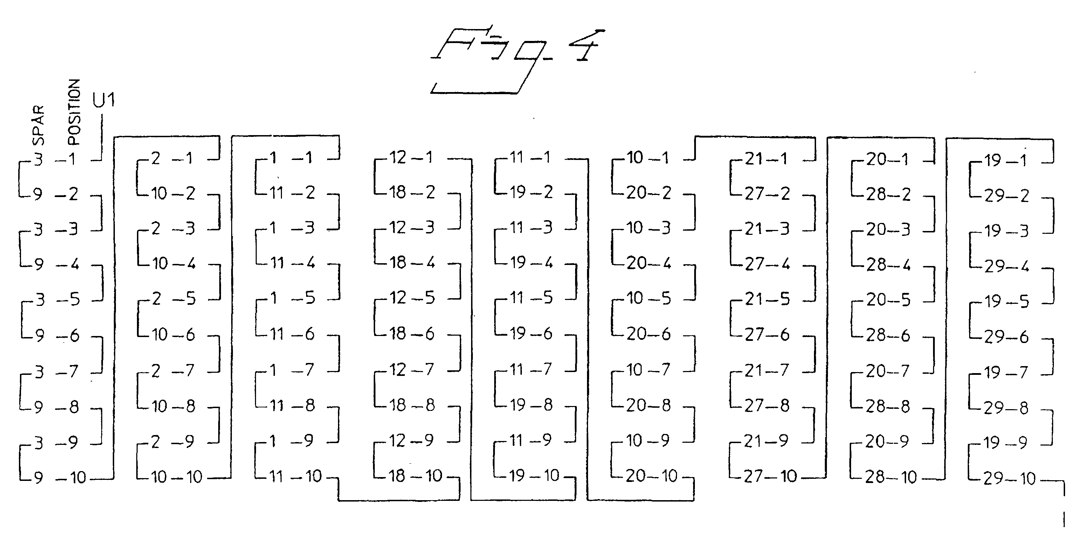

Figure 3 shows in a diametric section one half of a high-voltage generator with a stator 106, a rotor 107 and an air gap 108 between them. Figure 2 shows the inner surface 109 of the stator, facing the air gap 108. The stator 106 is provided with inwardly directed stator teeth 110 defining between them radial slots 111 to hold the cables 101 of the winding. The winding thus forms a large number of layers through the deep slots 111, which in the example shown have place for 12 cables in each enlargement 112. " Layer of the winding" in this context refers to layers at different radial distances from the central axis of the stator. "Stratum" on the other hand refers to strata of the winding at different axial distances from the end surfaces of the stator.

It is clear from Figure 2 how the cable 101 forms coils 113 which pass axially to and fro through the stator 106 and form arc-shaped coil ends outside the end surfaces 114 of the stator. A coil thus consists of one turn of the cable through the stator. A coil group comprises the winding for one phase. The part of a coil group situated in one and the same winding layer, and the coil ends of which are situated in different strata is here designated "coil group part".

Contrary to previously known multi-strata stator windings the coils 113 according to the invention are arranged such that they do not cross each other within the same coil group part. Figure 2 shows a group part comprising, in this case, four coils 113a, 113b, 113c and 113d situated axially, one outside the other and with substantially coinciding centres. Since the coil 113a has a larger diameter than coil 113b, which in turn has a larger diameter than coil 113c, which in turn has a larger diameter than coil 113d, these coils do not cross or touch each other. This implies that the number of slots 111 that each coil bridges before entering the stator again varies within the group part. The coil 113d thus bridges the least number of slots and the coil 113a the largest number of slots.

Winding is also performed so that, upon passage from the first slot in one direction to the second slot in the opposite direction, the cable in the coil changes position in the slot to the nearest winding layer outside it. The same thing occurs when it returns to the first slot. When all positions in the two slots have been filled, the coils produce a formation reminiscent of a spiral compressed from the sides, stretching from the air gap 108 to the stator yoke 115. The cable then passes to the next adjacent slot to form the next coil, inside or outside, in the same formation.

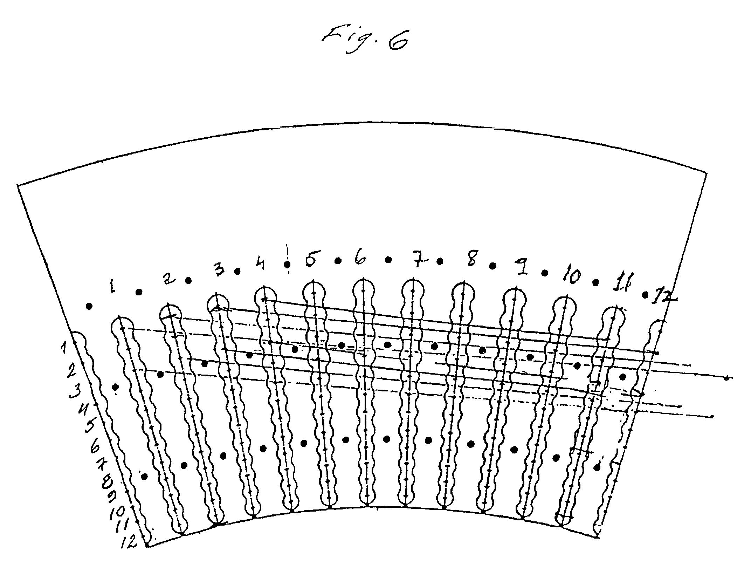

Figure 4 is a schematic diagram showing how the winding of a cable U1 is performed. In Figure 3 the slots 111 and positions therein have been numbered in corresponding manner to Figure 4. Contrary to the example in Figure 2, each coil group part comprises three instead of four coils. According to Figure 4 the cable U1 starts from position 1 in slot 3, changes to position 2 when it reaches slot 9, then to position 3 when it passes back to slot 3 and to position 4 in slot 9, and so on. This continues until all positions in slots 3 and 9 have been filled, whereupon the coils produced in this way together form the above-mentioned formation from the air gap 108 to the stator yoke 115. As is clear, each coil end bridges 9 - 3 = 6 slots. Winding is continued with the construction of a larger external coil in each turn in the formation, through the cable being conducted to position 1 in slot 2, thence to position 2 in slot 10 and back to position 3 in slot 2, and so on until position 10 in slot 10 has been filled. The coil ends here bridge 10 - 2 = 8 slots and the later coils will therefore be situated outside the earlier coils with substantially coinciding centres. The third coil in this group part is formed by the cable passing to position 1 in slot 1, from there to position 2 in slot 11 and then to position 3 in slot 1 and position 4 in slot 11, and so on. In this case the coil ends bridge 11 - 1 = 10 slots and the coils are therefore the largest in the group part and are situated outermost in the spiral. The coil group described forms the winding for one phase in the generator. The other phases are constructed in similar manner.

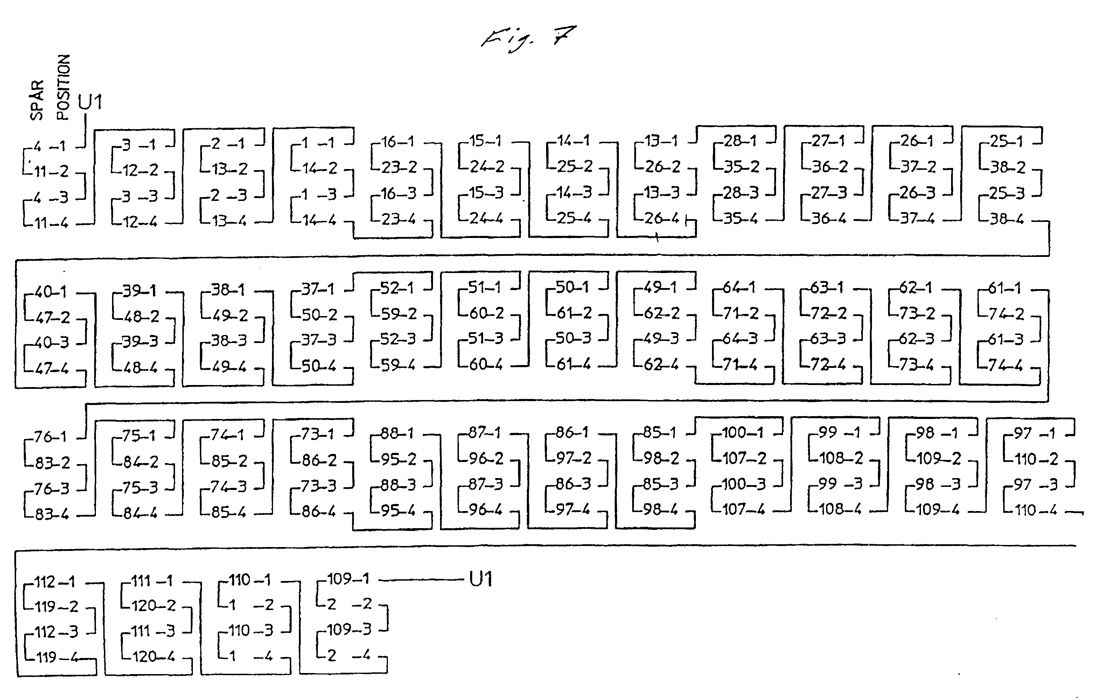

Figure 5 shows a second embodiment of the winding according to the invention. Contrary to the embodiment according to Figure 4, the positions 1 and 2 are completely wound in slots 4 and 11, 3 and 12 and 1 and 14, before winding is continued with positions 3 and 4 in the same slots. Winding of these four positions then continues in additional slots. The diagram shows the windings of one phase in a three-phase winding with four coils per slot and four slots per pole and phase.

In the two winding variants described, the number of coils in each coil group part is three and four, respectively. However, the invention is not limited to this, and the number may be anything from two to over ten.

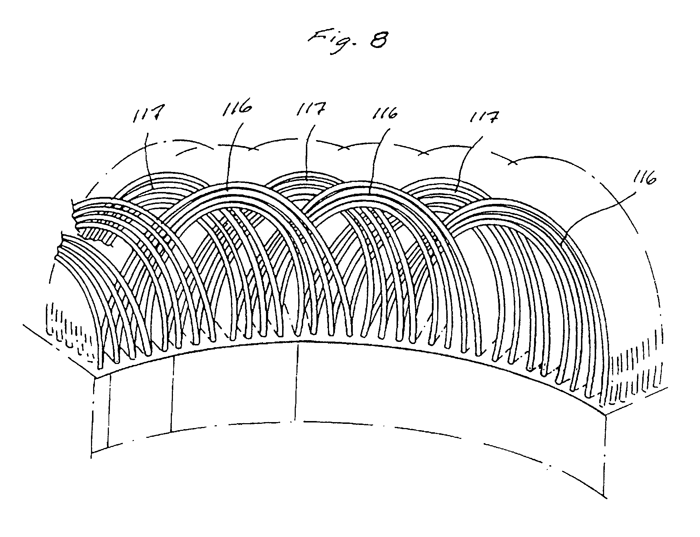

Figures 6-8 show a third embodiment of the winding according to the invention. As can be seen in Figure 6, the positions in the slots have been reversed from those in Figures 3-5 and are numbered radially inwards from the outside. As can be seen in Figure 8, the coil group parts are arranged in relation to each other in peripheral direction such that alternate coil group parts on the way to a layer situated radially further out lie radially inside the next following coil group part and alternate group parts lie radially outside the next following coil group part. Thus, on their way from position 1 in four adjacent slots 111, the coil group parts 116 run radially inside respective adjacent coil groups 117 on their way towards position 2 in four slots 111 bridging seven slots, whereas the coil group parts 117 run radially outside respective adjacently coil group parts 116. This arrangement reduces the growth of the coil end package by no less than 50%.

Figure 7 shows an embodiment of the winding .according to the invention, known as stepped lap winding. The diagram shows the winding of one phase with the cable U1. As is clear, the cable U1 starts from position 1 in slot 4, forms a coil end to position 2 in slot 11 and then forms the innermost coil in the next coil end group part by passing to position 3 in slot 4, then to position 4 in slot 11, then to position 1 in slot 3, continuing to position 2 in slot 12, and so on. Two coil end group parts are thus formed in parallel, having four coils each, the four coils bridging seven, nine , eleven and thirteen slots, respectively.

Figure 6 indicates the drawing of the cable for two coil group parts in the positions 1 - 4 in slots 1 - 4 and 11 - 14.

The stator winding according to the invention solves the problem of the large coil end package which, if previously known winding technology were used in the high-voltage machines under discussion, would be far too complicated, with a large number of intersections.

Besides the advantage of the reduced radial dimension of the coil end package, the winding according to the invention also provides a cavity which can be beneficially used to hold the coil end package. The cables vibrate during operation, and in order to avoid wear between them they must be reinforced. Regardless of whether such an arrangement is used, a pressure-distributing and wear-preventing curable compound can be used between the cables in the coil.

## Claims

1. A stator winding in a rotating electric machine comprising a stator (106) provided with radial slots (111) to hold a winding, in layers at different radial distances from the air gap (108) between the rotor (107) and the stator (106), wherein the winding is in the form of a cable wherein the part of the cable (101) that passes to and fro once through the stator (106) between different layers forms a coil (113) with an arc-shaped coil end protruding from each end surface (114) of the stator (106), wherein the coils (113) are divided into coil group parts and that all coils (113) in the same coil group part are arranged axially, one outside the other with substantially coinciding centres and with successively increasing diameters, the number of slots (111) that are bridged by the coils (113) successively increasing within the coil group part.

2. A stator winding as claimed in claim 1, **characterized in that** the coils (113) produce a formation from the air gap (108) towards the stator yoke (115) since, on passing from the first slot to the second, and also upon returning to the first slot, the cable (101) changes position to the next layer immediately outside until a number of positions in the slot have been filled and then passes to the nearest adjacent slot to form coils (113) that lie inside or outside the cable (101) in the other coils (113) included in the coil group part in the same formation.

3. A stator winding as claimed in claim 1, **characterized in that** all coils (113) in a coil group part are formed in sequence from the cable (101), the cable only subsequently passing to the next following coil group part to produce the latter.

4. A stator winding as claimed in any of claims 1-3, **characterized in that** the number of coils (113) in the coil group part is three.

5. A stator winding as claimed in any of claims 1-3, **characterized in that** the number of coils (113) in the coil group parts is four.

6. A stator winding as claimed in claim 1, **characterized in that** the coil group parts (116, 117) are arranged in relation to each other in peripheral direction such that alternate coil group parts (116) on their way to a radial outer layer are situated radially inside the next following coil group part (117) and alternate coil group parts (117) are situated radially outside the next following coil group part (116).

7. A stator winding as claimed claim 6, **characterized in that** the coils (113) are formed by the cable (101) upon passage from a first slot to a second slot, and also upon returning to the first slot, changing position to the next adjacent layer, and thereafter passing to the nearest adjacent slot and there filling corresponding positions, until two coil group parts have been formed simultaneously between altogether four positions in the relevant slots, whereupon the cable (101) continues in this way until these positions have been filled in all slots (111) of the stator (106).

8. A stator winding as claimed in any of claims 1-7, **characterized in that** a pressure-distributing and wear-preventing curable compound is provided between the cables in the coil end package.

9. A rotating electric machine, **characterized in that** it is provided with a stator winding as claimed in any of claims 1-8.

10. A rotating electric machine as claimed in claim 9, **characterized in that** the winding comprises one or more current-carrying conductors (102), wherein a first layer (103) having semiconducting properties is arranged around each conductor, a permanently insulating layer (104) is arranged around the first layer (103), and a second layer (105) having semiconducting properties is arranged around the insulating layer.

11. A rotating electric machine as claimed in claim 10, **characterized in that** the first layer (103) is at substantially the same potential as the conductor (102).

12. A rotating electric machine as claimed in claim 10 or claim 11, **characterized in that** the second layer (105) is arranged in such a manner that it constitutes substantially an equipotential surface surrounding the conductor(s).

13. A rotating electric machine as claimed in claim 12, **characterized in that** the second layer (105) is connected to a special potential.

14. A rotating electric machine as claimed in claim 13, **characterized in that** the special potential is earth potential.

15. A machine as claimed in any of claims 10-14, **characterized in that** at least two of said layers have substantially the same coefficient of thermal expansion.

16. A rotating electric machine as claimed in any of claims 10-15, **characterized in that** the current-carrying conductor (102) comprises a number of strand parts, only a few of the strand parts not being insulated from each other.

17. A rotating electric machine as claimed in any of claims 10-16, **characterized in that** each of said three layers is permanently connected to adjacent layers along substantially its entire continuous surface.

18. A rotating electric machine as claimed in claim 9 with magnetic circuit for high voltage wherein the magnetic circuit comprises a magnetic core and a winding, **characterized in that** the winding consists of a cable comprising one or more current-carrying conductors (102), each conductor consisting of a number of strand parts, an inner semiconducting layer (103) being arranged around each conductor, an insulating layer (104) of permanent insulation being arranged around the semiconducting layer (103), and a semiconducting layer (105) being arranged around the insulating layer.

19. A rotating electric machine with magnetic circuit for high voltage as claimed in claim 18, **characterized in that** the cable is also provided with metal screening and a sheath.

## Patentansprüche

1. Statorwicklung in einer rotierenden elektrischen Maschine, die einen Stator (106) mit radialen Wicklungsschlitzen (111) aufweist, um eine Wicklung in Schichten in unterschiedlichem radialem Abstand zu dem Luftspalt (108) zwischen dem Rotor (107) und dem Stator (106) zu halten, wobei die Wicklung in Form eines Kabels vorliegt und der Abschnitt des Kabels (101), der einmal hin und her durch den Stator (106) zwischen unterschiedlichen Schichten angeordnet ist, eine Spule (113) mit einem über jede Endfläche (114) des Stators (106) überstehenden bogenförmigen Spulenende bildet, wobei die Spulen (113) in Spulengruppenabschnitte unterteilt sind und alle Spulen (113) in dem gleichen Spulengruppenabschnitt in axialer Richtung angeordnet sind, und zwar eine über der anderen, wobei die Mittelpunkte der Spulen im Wesentlichen übereinstimmen, ihre Durchmesser nacheinander zunehmen, und die Anzahl der Wicklungsschlitze (111), die mit Hilfe der Spulen (113) überbrückt werden, allmählich innerhalb des Spulengruppenabschnitts zunehmen.

2. Statorwicklung nach Anspruch 1, **dadurch gekennzeichnet, dass** die Spulen (113) ein Gebilde von dem Luftspalt (108) in Richtung des Statorjochs (115) bilden, da das Kabel (101) bei der Führung vom ersten zum zweiten Schlitz und ebenfalls bei der Rückkehr zum ersten Schlitz seine Position zu der nächsten, unmittelbar außen anliegenden Schicht verändert, bis eine Reihe von Stellen in dem Wicklungsschlitz gefüllt worden sind, und dann weiter zu dem nächstgelegenen benachbarten Wicklungsschlitz gelangt, um dort Spulen (113) zu bilden, die innerhalb oder außerhalb des Kabels (101) in den anderen in dem Spulengruppenabschnitt in dem selben Gebilde enthaltenen Spulen (113) liegen.

3. Statorwicklung nach Anspruch 1, **dadurch gekennzeichnet, dass** alle Spulen (113) in einem Spulengruppenabschnitt nacheinander aus dem Kabel (101) gebildet werden, wobei das Kabel lediglich nacheinander von einem Spulengruppenabschnitt zu dem nächstfolgenden gelangt, um dort einen neuen Spulengruppenabschnitt zu erzeugen.

4. Statorwicklung nach einem der Ansprüche 1 bis 3, **dadurch gekennzeichnet, dass** die Anzahl der Spulen (113) im Spulengruppenabschnitt 3 beträgt.

5. Statorwicklung nach einem der Ansprüche 1 bis 3, **dadurch gekennzeichnet, dass** die Anzahl der Spulen (113) im Spulengruppenabschnitt 4 beträgt.

6. Statorwicklung nach Anspruch 1, **dadurch gekennzeichnet, dass** die Spulengruppenabschnitte (116, 117) in Relation zueinander in Umfangsrichtung angeordnet sind, so dass abwechselnd Spulengruppenabschnitte (116) auf ihrem Weg zu einer radial angeordneten Außenschicht radial innerhalb des nächstfolgenden Spulengruppenabschnitts (117) sowie abwechselnd Spulengruppenabschnitte (117) radial außerhalb des nächstfolgenden Spulengruppenabschnitts (116) angeordnet sind.

7. Statorwicklung nach Anspruch 6, **dadurch gekennzeichnet, dass** die Spulen (113) von dem Kabel (101) durch Führung von einem ersten Wicklungsschlitz zu einem zweiten Wicklungsschlitz und außerdem durch Rückkehr zu dem ersten Wicklungsschlitz gebildet werden, wobei das Kabel seine Position zu der nächstbenachbarten Schicht verändert und anschließend zu dem nächstbenachbarten Wicklungsschlitz gelangt und dort entsprechende Stellen füllt, bis zwei Spulengruppenabschnitte gleichzeitig zwischen insgesamt vier Stellen in den relevanten Wicklungsschlitzen ausgebildet worden sind, woraufhin sich das Kabel (101) auf diese Weise fortsetzt, bis diese Positionen in allen Wicklungsschlitzen (111) des Stators (106) ausgefüllt sind.

8. Statorwicklung nach einem der Ansprüche 1 bis 7, **dadurch gekennzeichnet, dass** eine druckverteilende und verschleissverhindernde aushärtbare Verbindung zwischen den Kabeln in der Spulenende-Packung vorgesehen ist.

9. Rotierende elektrische Maschine, **dadurch gekennzeichnet, dass** sie eine Statorwicklung gemäß einem der Ansprüche 1 bis 8 aufweist.

10. Rotierende elektrische Maschine nach Anspruch 9, **dadurch gekennzeichnet, dass** die Wicklung einen oder mehrere stromführende Leiter (102) umfasst, wobei eine erste Schicht (103) mit Halbleiter-Eigenschaften jeden Leiter umgibt, eine permanent-isolierende Schicht (104) die erste Schicht (103) umgibt, und eine zweite Schicht (105) mit Halbleiter-Eigenschaften die Isolierschicht umgibt.

11. Rotierende elektrische Maschine nach Anspruch 10, **dadurch gekennzeichnet, dass** die erste Schicht (103) im Wesentlichen das selbe Potential wie der Leiter (102) aufweist.

12. Rotierende elektrische Maschine nach Anspruch 10 oder 11, **dadurch gekennzeichnet, dass** die zweite Schicht (105) derart angeordnet ist, dass sie im Wesentlichen eine den/die Leiter umgebende Äquipotentialfläche bildet.

13. Rotierende elektrische Maschine nach Anspruch 12, **dadurch gekennzeichnet, dass** die zweite Schicht (105) an ein spezielles Potential angeschlossen ist.

14. Rotierende elektrische Maschine nach Anspruch 13, **dadurch gekennzeichnet, dass** das spezielle Potential Erdpotential ist.

15. Rotierende elektrische Maschine nach einem der Ansprüche 10 bis 14, **dadurch gekennzeichnet, dass** mindestens zwei der Schichten im Wesentlichen den selben Wärmeausdehnungskoeffizienten aufweisen.

16. Rotierende elektrische Maschine nach einem der Ansprüche 10 bis 15, **dadurch gekennzeichnet, dass** der stromführende Leiter (102) eine Anzahl von Litzenabschnitten aufweist, wobei lediglich wenige der Litzenabschnitte nicht voneinander isoliert sind.

17. Rotierende elektrische Maschine nach einem der Ansprüche 10 bis 16, **dadurch gekennzeichnet, dass** jede der drei Schichten mit den angrenzenden Schichten im Wesentlichen entlang der gesamten durchgehenden Oberfläche permanent verbunden ist.

18. Rotierende elektrische Maschine nach Anspruch 9 mit einem Magnetschaltkreis für Hochspannung, wobei der Magnetschaltkreis einen Magnetkern und eine Wicklung umfasst, **dadurch gekennzeichnet, dass** die Wicklung aus einem Kabel besteht, das einen oder mehrere stromführende Leiter (102) aufweist, wobei jeder Leiter aus einer Anzahl von Litzenabschnitten, einer jeden Leiter umgebenden Halbleiterschicht (103), einer die Halbleiterschicht (103) umgebenden permanent-isolierenden Schicht (104), und einer die Isolierschicht umgebenden Halbleiterschicht (105) besteht.

19. Rotierende elektrische Maschine mit einem Magnetschaltkreis für Hochspannung nach Anspruch 18, **dadurch gekennzeichnet, dass** das Kabel zudem mit einer Abschirmung aus Metall und einem Mantel versehen ist.

## Revendications

1. Bobinage pour stator de machine électrique tournante comprenant un stator (106) muni de rainures radiales (111) pour maintenir un enroulement, en couches à différentes distances radiales de l'entrefer (108) entre le rotor (107) et le stator (106), dans lequel le bobinage est réalisé sous la forme d'un câble de telle manière que la partie du câble (101), qui passe aller et retour une fois à travers le stator (106) entre différentes couches, forme une bobine (113) avec une tête de bobine en forme d'arc faisant saillie de chaque surface d'extrémité (114) du stator (106), dans lequel les bobines (113) sont divisées en sections de groupe de bobines et toutes les bobines (113) dans la même portion de groupe de bobines sont disposées en direction axiale l'une à l'extérieur de l'autre avec des centres sensiblement coïncidents et avec des diamètres augmentant progressivement, le nombre de rainures (111) qui sont enjambées par les bobines (113) augmentant progressivement à l'intérieur de la portion de groupe de bobines.

2. Bobinage pour stator selon la revendication 1, **caractérisé en ce que** les bobines (113) réalisent une formation de l'entrefer (108) vers la culasse du stator (115) du fait que, en passant d'une première rainure à la seconde et également en revenant à la première rainure, le câble (101) change de position vers la couche suivante immédiatement à l'extérieur jusqu'à ce qu'un certain nombre de positions dans la rainure aient été remplies et passe ensuite à la rainure adjacente la plus proche pour former des bobines (113) qui reposent à l'intérieur ou à l'extérieur du câble (101) dans les autres bobines (113) comprises dans la portion de groupe de bobines dans la même formation.

3. Bobinage pour stator selon la revendication 1, **caractérisé en ce que** toutes les bobines (113) dans une portion de groupe de bobines sont formées en séquence à partir du câble (101), le câble passant seulement ultérieurement à la portion suivante de groupe de bobines pour réaliser la seconde.

4. Bobinage pour stator selon l'une quelconque des revendications 1 à 3, **caractérisé en ce que** le nombre de bobines (113) dans les sections de groupe de bobines est trois.

5. Bobinage pour stator selon l'une quelconque des revendications 1 à 3, **caractérisé en ce que** le nombre de bobines (113) dans les sections de groupe de bobines est quatre.

6. Bobinage pour stator selon la revendication 1, **caractérisé en ce que** les sections de groupe de bobines (116, 117) sont disposées les unes par rapport aux autres en direction périphérique de telle manière que des sections de groupe de bobines (116) alternées dans leur parcours vers une couche externe radiale soient situées en direction radiale à l'intérieur de la section de groupe de bobines (117) suivant immédiatement et que des sections de groupe de bobines (117) alternées soient situées en direction radiale à l'extérieur de la section de groupe de bobines (116) suivant immédiatement.

7. Bobinage pour stator selon la revendication 6, **caractérisé en ce que** les bobines (113) sont formées par le câble (101) sur le passage d'une première rainure à une deuxième rainure et également sur le retour à la première rainure, en changeant de position à la couche adjacente suivante et en passant ensuite à la rainure adjacente la plus proche et en y remplissant des positions correspondantes, jusqu'à ce que deux sections de groupe de bobines aient été formées simultanément entre quatre positions en tout dans les rainures correspondantes, après quoi le câble (101) continue de cette manière jusqu'à ce que ces positions aient été remplies dans toutes les rainures (111) du stator (106).

8. Bobinage pour stator selon l'une quelconque des revendications 1 à 7, **caractérisé en ce qu'**un composé vulcanisable de répartition de pression et de protection contre l'usure est prévu entre les câbles dans le paquet de têtes de bobine.

9. Machine électrique tournante **caractérisée en ce qu'**elle est pourvue d'un bobinage pour stator selon. l'une quelconque des revendications 1 à 8.

10. Machine électrique tournante selon la revendication 9, **caractérisée en ce que** le bobinage comprend un ou plusieurs conducteurs parcourus par le courant (102), de telle manière qu'une première couche (103) possédant des propriétés de semi-conducteur soit disposée autour de chaque conducteur, une couche isolante permanente (104) soit disposée autour de la première couche (103) et une deuxième couche (105) possédant des propriétés de semi-conducteur soit disposée autour de la couche isolante.

11. Machine électrique tournante selon la revendication 10, **caractérisée en ce que** la première couche (103) est sensiblement au même potentiel que le conducteur (102).

12. Machine électrique tournante selon la revendication 10 ou 11, **caractérisée en ce que** la deuxième couche (105) est disposée de telle manière qu'elle constitue essentiellement une surface équipotentielle entourant le ou les conducteurs.

13. Machine électrique tournante selon la revendication 12, **caractérisée en ce que** la deuxième couche (105) est reliée à un potentiel spécial.

14. Machine électrique tournante selon la revendication 13, **caractérisée en ce que** le potentiel spécial est le potentiel terrestre.

15. Machine électrique tournante selon l'une quelconque des revendications 10 à 14, **caractérisée en ce qu'**au moins deux desdites couches ont sensiblement le même coefficient de dilatation thermique.

16. Machine électrique tournante selon l'une quelconque des revendications 10 à 15, **caractérisée en ce que** le conducteur parcouru par le courant (102) comprend plusieurs sections de toron, seules quelques sections de toron n'étant pas isolées les unes des autres.

17. Machine électrique tournante selon l'une quelconque des revendications 10 à 16, **caractérisée en ce que** chacune desdites trois couches est connectée de manière permanente aux couches adjacentes sensiblement le long de toute sa surface continue.

18. Machine électrique tournante selon la revendication 9 avec un circuit magnétique pour haute tension, dans laquelle le circuit magnétique comprend un tore magnétique et un bobinage, **caractérisée en ce que** le bobinage comprend un ou plusieurs conducteurs parcourus par le courant (102), chaque conducteur comprenant plusieurs sections de toron, une couche interne semi-conductrice (103) étant disposée autour de chaque conducteur, une couche isolante (104) d'isolation permanente étant disposée autour de la couche semi-conductrice (103) et une couche semi-conductrice (105) étant disposée autour de la couche isolante.

19. Machine électrique tournante avec un circuit magnétique pour haute tension selon la revendication 18, **caractérisée en ce que** le câble est également muni d'un blindage métallique et d'une gaine.
